# EUROPEAN PATENT SPECIFICATION

(11) **EP 3 666 466 B1**
(45) Date of publication and mention of the grant of the patent: **18.01.2023**
(21) Application number: 17921171.9
(22) Date of filing: 09.08.2017
(51) Int. Cl.: B25B 27/20, B23P 19/04, F16L 33/025, B25B 1/10, B25B 1/24, B25B 3/00, B25B 25/00

(54) **CLIP OPENING DEVICE**
CLIPÖFFNUNGSVORRICHTUNG
DISPOSITIF D'OUVERTURE D'ATTACHE

(43) Date of publication of application: 17.06.2020
(73) Proprietor: Honda Motor Co., Ltd., Tokyo 107-8556 (JP)
(72) Inventor: TRIVENTI, Lucio, 66041 Piazzano di Atessa (Chieti) (IT); DI PEPPE, Erminio, 66041 Piazzano di Atessa (Chieti) (IT); SPINELLI, Domenico, 66041 Piazzano di Atessa (Chieti) (IT); PAOLOEMILIO, Gianluca, 66041 Piazzano di Atessa (Chieti) (IT); BERARDI, Simone, 66041 Piazzano di Atessa (Chieti) (IT)
(74) Representative: Kiwit, Benedikt
(86) International application number: PCT/JP2017/029011
(87) International publication number: WO 2019/030877

(56) References cited:
- WO-A1-2014/136536
- WO-A1-2014/136536
- CN-A- 102 284 854
- CN-A- 102 284 854
- CN-Y- 201 385 293
- FR-E- 87 715
- JP-A- H09 239 169
- JP-A- 2004 051 280
- JP-U- S57 140 932
- JP-U- S63 166 371
- JP-U- S63 166 371
- US-A- 5 711 515
- US-A1- 2009 199 681
- US-A1- 2012 324 687

## Description

### Technical Field

The present invention relates to a clip expansion apparatus (clip opening device) for expanding a clip externally fitted to a flexible body such as a hose.

### Background Art

It has been common to insert a tube into a hose, and tighten the hose using a clip for preventing detachment of the hose from the tube. The clip includes a ring-shaped (typically, circular) main body, and a first claw and a second claw provided at both ends of the main body in a manner to protrude outward in a diameter direction of the main body. When no external force is applied to the first claw and the second claw, the main body is contracted (reduced in diameter) to the greatest extent. In contrast, when an external force is applied to the first claw and the second claw to move the first claw and the second claw toward each other, the main body is expanded. That is, in the former case, the opening diameter is the smallest, and in the latter case, the opening diameter is the largest.

As described above, an external force is applied to expand the clip, and the hose is inserted into the clip. As the expansion apparatus for expanding the clip as described above, an expansion apparatus disclosed in Japanese Laid-Open Patent Publication No. 06-170666 is known. In this expansion apparatus, a first claw is pressed toward a second claw by one of two push pins, and the second claw is pushed toward the first claw by the other of the push pins to expand the main body.

From WO2014/1236536 A1 a tube clip mounting device according to the preamble of claim 1 is shown.

A clip is inserted freely into a recess that is formed by two housings. A pressing part is moved towards the first claw, the second claw is pushed against the first claw and the diameter of the clip is expanded. At the same time the one housing is moved in the direction of the diameter expansion. Thus, the clip does not interfere with the recess when the diameter of the clip is expanded.

From JP S63 166 371 U a mounting device is shown. A clip is freely inserted with its first and second claw into a recess of a base so that the edge of the first claw abuts the end of the recess. To expand the clip, a cylinder is moved against the second claw of the clip until the surface of the second claw lies flat against the surface of the first claw, which is now flat against the end of the recess.

From CN 102 284 854 A21 and CN 201 385 293 Y spring clamp assembly tools are shown. To prevent a deformation or flying out, the two claws of the clip are clamped by a fixed clamp die and a movable clamp die. The movable clamp is pushed in the direction of the fixed clamp by a driving device or a handle support so that the claws are compressed and the spring is increased. Due to the arc surface of these clamps the spring is tightly wrapped so that a deformation or flying out of the clamp is avoided.

From US 2009/199 681 A1 an installation tool is known, which allows maintenance and removal of clips of different size and configuration. The installation tool consists two end plates spaced by two parallel rails. Between these end plates there is an intermediate slide plate connected to the end plates by a threaded rod so that the intermediate plate can move between the two end plates when the threaded rod is rotated. Depending on the shape of the spring used, the intermediate slide plate and one end plate contain a transverse plot or a channel to engage the claws of the spring clip.

### Summary of Invention

A main object of the present invention is to provide a clip expansion apparatus capable of expanding a clip easily.

Another object of the present invention is to provide a clip expansion apparatus having simple structure.

According to an embodiment of the present invention, a clip expansion apparatus for expanding a clip is provided. The clip includes a main body curved in a ring shape and a first claw and a second claw provided at both ends of the main body to protrude outward in a diameter direction, the clip being expanded by moving the first claw and the second claw toward each other, the clip expansion apparatus including a base including a slide hole having an opening opened up to the clip, two main body supports respectively provided with mounts disposed in the opening of the slide hole with a clearance between the two main body supports and the mounts configured to support the main body by contacting an outer circumferential surface between the first claw and the second claw, a first claw holder configured to support an outer surface of the first claw, and a pressing part configured to move back and forth in the slide hole relative to the first claw holder by a moving mechanism, wherein when the pressing part moves toward the first claw holder, the pressing part presses an outer surface of the second claw inserted between the two main body supports and into the slide hole to move the second claw toward the first claw.

As described above, in the present invention, in the state where the first claw of the clip is held by the first claw holder, the second claw of the clip is pressed by the pressing part. As a result, the main body is expanded (the diameter of the main body is expanded). That is, using the single moving mechanism and the single pressing part, it is possible to expand the clip.

Stated otherwise, by adopting the above structure, it becomes unnecessary to provide the pressing part for pressing the first claw and the moving mechanism for moving the pressing part. Accordingly, it is possible to simplify the structure of the clip expansion apparatus.

The main body support is provided at the base, the main body support being configured to support the main body by contacting an outer circumferential surface of the main body. In the structure, since not only the first claw but also the main body is supported by the clip expansion apparatus, the clip is held by the clip expansion apparatus stably.

The main body support is positioned so as to be capable of counteracting the moment of force around the first claw generated in the clip when the clip is expanded. When the main body support is positioned adjacent to the second claw, the main body support can hold the clip. Thus, the main body support is configured to contact a portion of the outer circumferential surface of the main body of the clip, adjacent to the second claw.

Preferably, the main body support is detachably attached to the base, and in other words, the main body support is provided separately from the base. In this case, the main body support can be changed in accordance with the size or shape of the clip. That is, it is possible to apply to clips having various sizes or shapes by changing the main body support.

Further, a magnet may be provided for the main body support. When the clip is made of a material that can be attached magnetically to the magnet, the main body is securely held on the main body support by the magnet. Thus, it becomes possible to sufficiently and fixedly position the clip.

Further, preferably, a stopper is provided for the base. When the stopper stops the pressing part, it is possible to stop expanding the clip.

Preferably, the clip expansion apparatus further includes an instruction means, a detection means supported by the base, and configured to detect that the clip is present at the base, and a control means configured to permit movement of the pressing part toward the first claw holder when an instruction to expand the clip is issued from the instruction means and the detection means detects that the clip is present at the predetermined position with respect to the base. In the structure, it is possible to prevent movement of the pressing part when the clip is not held at the predetermined position of the clip expansion apparatus.

Preferably, the detection means is held by a detection means holding member, and the detection means holding member is fixed to the base in a manner that a position of the detection means holding member relative to the base is changeable. In this structure, the position of the detection means can be changed depending on the type of the clip. As a result, since the detection means can be applied to several types of clips, the structure of the detection means is simplified and the cost thereof can be reduced.

For example, it is adequate that the detection means is supported by the base through a detection means holding member. In this regard, an engagement part may be provided for one of the detection means holding member and the base, and an engagement groove may be provided for another of the detection means holding member and the base, for engagement with the engagement part in a movable manner. In this case, the position of the detection means holding member relative to the base is changeable by moving the engagement part within the engagement groove. Therefore, at the time of expanding a clip having an opening diameter which is different from that of the clip which has been expanded, the position of the detection means may be changed by changing the position of the detection means holding member.

Therefore, for each of a plurality of types of clips having different opening diameters, it becomes possible to determine whether the clip is present at the base without changing the detection distance of the detection means or without performing complicated computation processing.

A magnet may be provided for the first claw holder. In this case, the first claw is securely held on the first claw holder by the magnet. Thus, it becomes possible to sufficiently and fixedly position the first claw. If this structure is adopted, a magnet may or may not be provided for the main body support.

### Brief Description of Drawings

FIG. 1 is an overall perspective view schematically showing a clip;
FIG. 2 is a perspective view schematically showing main components of a clip expansion apparatus according to an embodiment of the present invention;
FIG. 3 is a cross sectional side view showing main components of the clip expansion apparatus in FIG. 2;
FIG. 4 is a cross sectional view taken along line IV-IV in FIG. 7;
FIG. 5 is a side cross sectional view showing a first claw holder of the clip expansion apparatus in FIG. 2;
FIG. 6 is an enlarged side view showing main components of the clip expansion apparatus in FIG. 2; and
FIG. 7 is a cross sectional side view showing a state where a pressing body (pressing part) of the clip expansion apparatus has moved toward the first claw holder, and pressed a second claw.

### Description of Embodiments

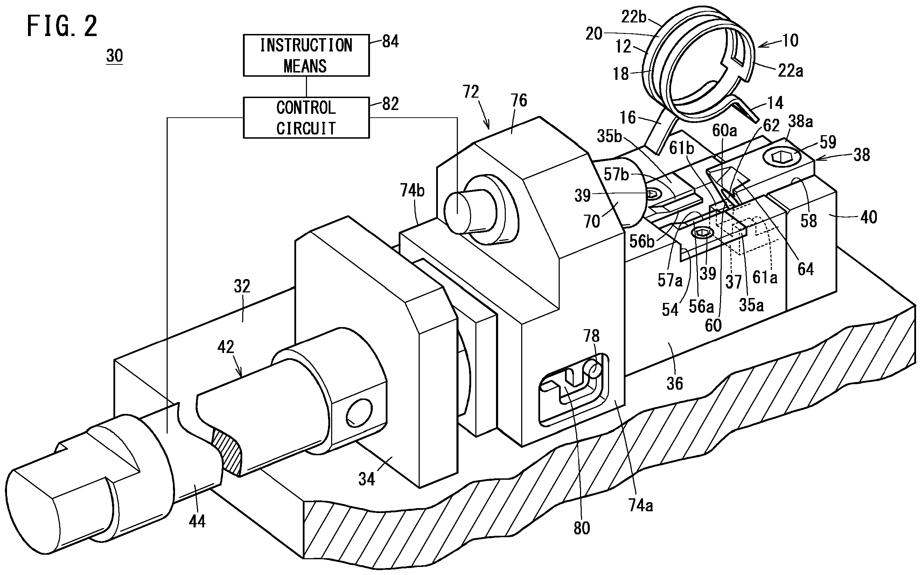

Hereinafter, a preferred embodiment of a clip expansion apparatus according to the present invention will be described with reference to the accompanying drawings. In the following description, the "lower" and the "upper" correspond respectively to the lower direction and the upper direction in FIGS. 2 to 7. However, these expressions are used for ease of understanding, and do not specify the orientation or direction when the clip expansion apparatus is used in practical applications.

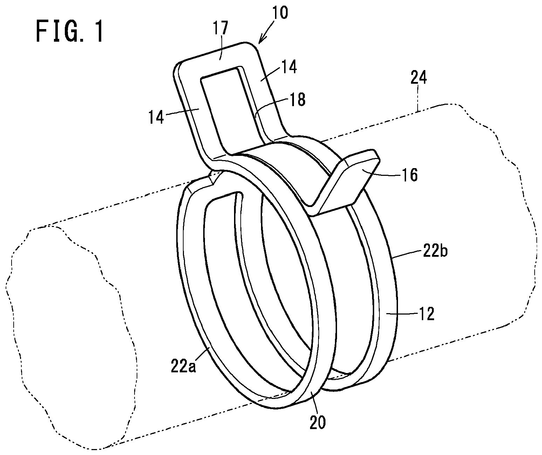

First, a clip will be described briefly. As shown in FIG. 1, a clip 10 includes a main body 12 curved in a circular ring shape, and first claws 14 and a second claw 16 provided at both ends of the main body 12, and extending outward in the diameter direction of the main body 12. The two first claws 14 are disposed side by side, to the right and left in FIG. 1, and extend from one end of the main body 12 in parallel with each other. The first claws 14 are connected by a coupling portion 17, but may be provided without the coupling portion 17.

An insertion hole 18 is formed from the first claws 14 to the main body 12. The insertion hole 18 extends in a circumferential direction of the main body 12. The portion of the main body 12 adjacent to the second claw 16 where the insertion hole 18 is not formed is slightly narrow in comparison with the portion where the first claw 14 and the insertion hole 18 of the main body 12 are formed. The portion of the main body 12 adjacent to the second claw 16 is inserted into the insertion hole 18. The second claw 16 protrudes from an end of the main body 12 inserted into the insertion hole 18.

Reference numeral 20 denotes an outer circumferential surface of the clip 10, and reference numerals 22a and 22b denotes side end surfaces of the clip 10.

When no external force is applied to the first claw 14 and the second claw 16, the main body 12 is contracted to the greatest extent, to tighten a hose 24. If an external force is applied to the first claw 14 and the second claw 16 to move them toward each other, the main body 12 is expanded (the diameter of the main body 12 is increased). As a result, the force of tightening the hose 24 is decreased.

In the embodiment of the present invention, the clip 10 is made of material which can be magnetically attached to ferromagnetic material such as a permanent magnet.

Next, a clip expansion apparatus 30 for expanding the clip 10 having the structure as described above will be described. FIG. 2 is a perspective view showing main components of the clip expansion apparatus 30 according to the embodiment of the present invention. The clip expansion apparatus 30 includes a table 32, a cylinder support 34 provided on the table 32, a base 36 to which main body supports 35a, 35b supporting the main body 12 of the clip 10 are attached, a stopper 37 supporting the second claw 16, and a first claw holder 38 supporting an outer surface of the first claw 14.

Among these components, the main body supports 35a, 35b are respectively coupled with the base 36 through bolts 39. The cylinder support 34 and the base 36 are fixedly positioned on the table 32 through unillustrated bolts. The stopper 37 and the first claw holder 38 are fixedly positioned on the base 36 through a block body 40.

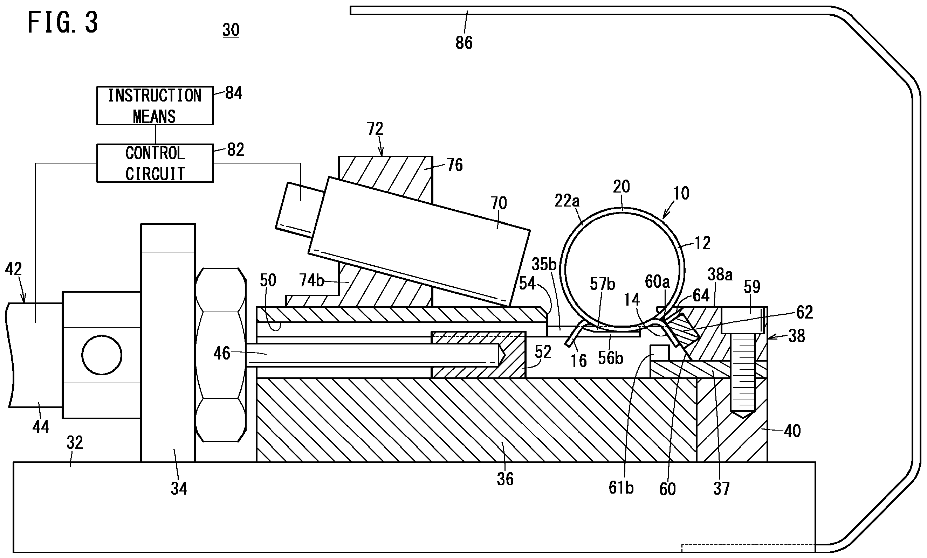

A pneumatic cylinder 42 as a moving mechanism is supported by the cylinder support 34. A tube 44 of the pneumatic cylinder 42 is fixedly positioned at the cylinder support 34 such that a rod 46 (see FIG. 3) extends in a horizontal direction, and faces the base 36.

FIG. 3 is a side cross sectional view showing main components of the clip expansion apparatus 30. As shown in FIG. 3, a slide hole 50 is formed in the base 36. The slide hole 50 is a passage extending in a longitudinal direction of the base 36 (in a direction from the cylinder support 34 toward the first claw holder 38). The rod 46 of the pneumatic cylinder 42 is inserted into the slide hole 50, and a pressing body 52 as a pressing part is attached to a front end of the rod 46. As described later, the pressing body 52 presses the outer surface of the second claw 16.

A step 54 is formed in the base 36 at a position adjacent to the first claw holder 38. The step 54 is depressed toward the table 32. From the step 54 as a border, the slide hole 50 is opened up to the first claw holder 38. The main body supports 35a, 35b are disposed in an opening of the slide hole 50.

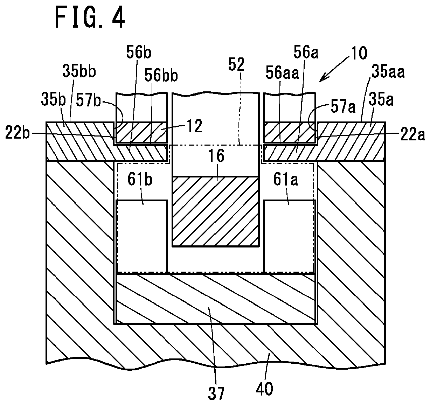

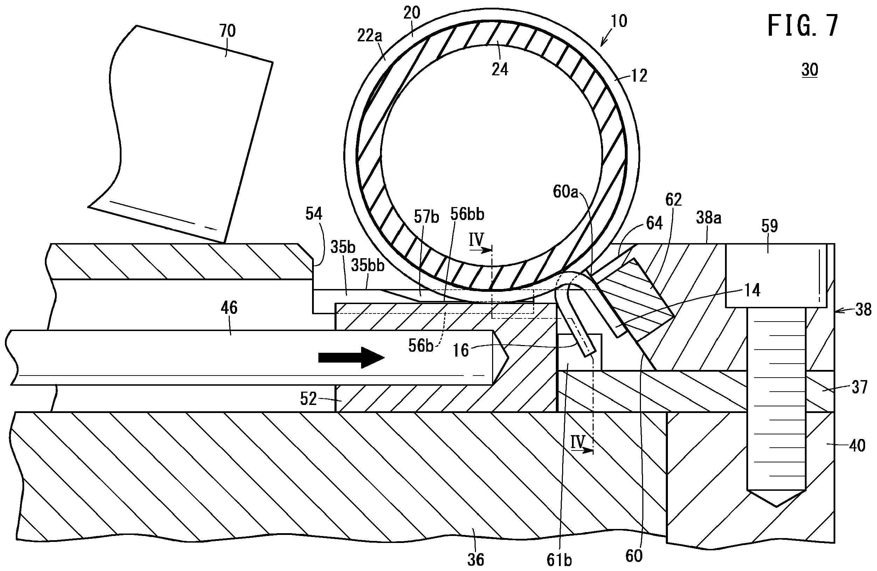

The main body supports 35a, 35b are respectively provided with mounts 56a, 56b protruding from the vicinity of the step 54 (see FIG. 2). As shown in FIG. 3 and FIG. 4, which is a cross sectional view taken along line IV-IV in FIG. 7, top surfaces 56aa, 56bb of the mounts 56a, 56b contact a portion of the outer circumferential surface 20 of the main body 12 of the clip 10, adjacent to the second claw 16. Further, vertical walls 57a, 57b disposed between the top surfaces 56aa, 56bb of the mounts 56a, 56b and top surfaces 35aa, 35bb of the main body supports 35a, 35b are positioned adjacent to the side end surfaces 22a, 22b of the clip 10, with a slight clearance therebetween. Thus, the main body 12 is supported by the main body supports 35a, 35b. The distance between the mounts 56a, 56b is substantially the same as the size of the insertion hole 18 in the width direction.

For example, the block body 40 is coupled to the base 36 through a bolt (not shown). Further, a recess 58 is formed at an upper position of the block body 40. The stopper 37 and the first claw holder 38 are inserted into the recess 58. The stopper 37 and the first claw holder 38 are coupled to the block body 40 through a bolt 59, and thereby supported indirectly by the base 36.

The stopper 37 is disposed in the slide hole 50 so as to face the pressing body 52 (see FIG. 3). As shown in FIG. 4, the stopper 37 has a pair of second claw guides 61a, 61b protruding toward the opening of the slide hole 50. The second claw guides 61a, 61b are spaced from each other to such an extent that the second claw 16 can be inserted therebetween.

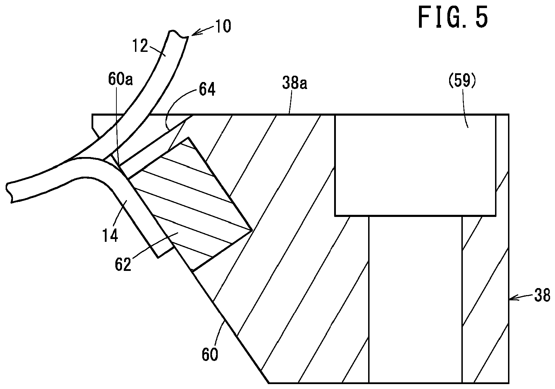

As shown in FIG. 5, a surface of the first claw holder 38 facing the mounts 56a, 56b is a first inclined surface 60 inclined in a manner that the first inclined surface 60 is gradually spaced from the mounts 56a, 56b toward the lower side. A magnet 62 is embedded inside the first inclined surface 60, and the first claw 14 is magnetically attached to the magnet 62. Further, a second inclined surface 64 is formed from a terminal point 60a of the first inclined surface 60 to an upper end surface 38a of the first claw holder 38. Thus, the first claw holder 38 is prevented from obstructing the main body 12.

As shown in FIG. 2, the clip expansion apparatus 30 includes a proximity sensor 70 (detection means) and a sensor holding member 72 (detection means holding member) for supporting the proximity sensor 70. In the clip expansion apparatus 30, the sensor holding member 72 lies across the base 36. That is, the sensor holding member 72 includes legs 74a, 74b, and the base 36 extends through a space between the legs 74a, 74b. Further, the proximity sensor 70 is held by a sensor holder 76 bridging from the leg 74a to the leg 74b. The proximity sensor 70 is held in a slightly inclined orientation in a manner that the detection unit of the proximity sensor 70 is positioned adjacent to the mounts 56a, 56b.

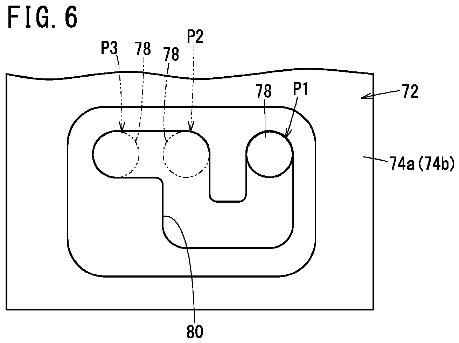

In this regard, a cam projection 78 (engagement part) shown in FIGS. 2 and 6 protrudes from each of both side surfaces of the base 36. Each of the legs 74a, 74b of the sensor holding member 72 has a cam groove 80 (engagement groove) formed in a crank shape. The cam projection 78 is inserted through the cam groove 80. As a result, the sensor holding member 72 is positioned on the base 36.

In the above structure, a control circuit 82 is electrically connected to the proximity sensor 70 and the pneumatic cylinder 42. That is, the control circuit 82 receives detection signals from an instruction means 84 and the proximity sensor 70, and an instruction signal to move forward or backward is transmitted to the pneumatic cylinder 42. In this case, "moving forward" means that the rod 46 moves in a direction in which the rod 46 approaches the first claw holder 38, and "moving backward" means that the rod 46 moves in a direction in which the rod 46 is spaced away from the first claw holder 38.

The clip expansion apparatus 30 further includes a transparent resin cover 86 fixed to the base 32 (see FIG. 3). The cover 86 rises so as to cover the block body 40, and then is bent so as to extend along the extending direction of the pneumatic cylinder 42. The cover 86 is opened in the axial direction of the hose 24 (a direction perpendicular to the sheet of FIG. 3). The clip expansion apparatus 30 according to the embodiment of the present invention basically has the structure as described above. Next, effects and advantages of the clip expansion apparatus 30 will be described in relation to operation of the clip expansion apparatus 30.

At the time of expanding the clip 10, and inserting the hose 24 (see FIG. 1) through the clip 10, the operator operates the clip expansion apparatus 30 to hold the clip 10. Specifically, as shown in FIG. 2, the clip 10 is placed such that the first claw 14 and the second claw 16 are oriented downward, and the first claw 14 is positioned so as to face the first claw holder 38. In this state, the clip 10 is moved downward, the second claw 16 is positioned between the mounts 56a, 56b, and the second claw 16 is inserted into the slide hole 50. Together therewith, a portion of the outer circumferential surface 20 of the main body 12, adjacent to the second claw 16 is brought into contact with the mounts 56a, 56b. Then, the side end surfaces 22a, 22b of the main body 12 is positioned adjacent to the vertical walls 57a, 57b.

Further, the outer surface of the first claw 14 is positioned adjacent to the first inclined surface 60 of the first claw holder 38. It should be noted that, since the first claw holder 38 has the second inclined surface 64, the first claw holder 38 does not obstruct the main body 12.

As described above, the magnet 62 is embedded inside the first inclined surface 60. The clip 10 is made of material which can be magnetically attached to the magnet 62. Therefore, the first claw 14 is attracted to the first inclined surface 60 by a magnetic force. Thus, the first claw 14 is securely and fixedly positioned at the first claw holder 38.

In this manner, the main body 12 is supported by the main body supports 35a, 35b and the first claw 14 is held by the first claw holder 38. As a result, the clip 10 is stably held by the clip expansion apparatus 30. In this state, the operator issues an instruction to expand the clip 10 using a foot pedal or the like as an instruction means 84. Then, the proximity sensor 70 detects whether "The clip 10 is present at a proper position with respect to the base 36." Upon reception of the detection signal of "Proper position", the control circuit 82 outputs an instruction signal "Movement of the rod 46 toward the first claw holder 38 is permitted." to the pneumatic cylinder 42. As a result, the rod 46 can move forward toward the first claw holder 38.

Along with the forward movement of the rod 46, the pressing body 52 slides inside the slide hole 50, and moves toward the first claw holder 38. In the middle of this movement, the pressing body 52 contacts the outer surface of the second claw 16, and as shown in FIG. 7, in this state, the pressing body 52 moves further toward the first claw holder 38.

In this state, since the first claw 14 is fixedly positioned at the first claw holder 38, the second claw 16 is pressed by the pressing body 52, and moves toward the first claw 14. As a result, the first claw 14 and the second claw 16 move toward each other. At this time, the second claw 16 is inserted between the second claw guides 61a, 61b (see FIG. 4), and moves toward the first claw 14 in this state. At this time, the side end surfaces of the second claw 16 are positioned adjacent to the wall surfaces of the second claw guides 61a, 61b, and the side end surfaces 22a, 22b of the main body 12 are positioned adjacent to the vertical walls 57a, 57b. Owing to both positional relationships, the orientation of the clip 10 is stabilized. That is, it is difficult for the clip 10 to be inclined toward the side end surface 22a or the side end surface 22b. Therefore, it is possible to prevent the clip 10 from being deformed or not being sufficiently expanded.

The main body 12 is expanded as the second claw 16 moves toward the first claw 14. Then, when the pressing body 52 comes into contact with the end surface of the stopper 37, the pressing body 52 stops, and the expansion of the main body 12 also stops.

Accordingly, the operator may insert the hose 24 into the expanded main body 12 (see FIG. 7). Because the orientation of the clip 10 is stabilized, it is easy to perform this operation. Further, since the cover 86 is opened in a direction perpendicular to the sheet of FIG. 7, that is, in both directions along the axial direction of the hose 24, the hose 24 does not obstruct the cover 86.

As described above, even though the embodiment of the present invention has simple structure using the single pneumatic cylinder 42 (moving mechanism) and the single pressing body 52 (pressing part), it is possible to expand the clip 10 easily. Further, since the structure is simple, it is possible to produce the clip expansion apparatus 30 at low cost.

After the hose 24 is inserted into the clip 10, the operator moves the rod 46 backward using the instruction means 84 (foot pedal or the like). Alternatively, when the rod 46 moves to the front end, and a predetermined time has elapsed, the control circuit 82 may control the rod 46 to move backward. In the structure, since the pressing body 52 is spaced away from the second claw 16, the first claw 14 and the second claw 16 are released from the pressure of the pressing body 52. As a result, by the elasticity of the main body 12, the second claw 16 moves away from the first claw 14, and the main body 12 is contracted to have its original opening diameter. Consequently, the clip 10 tightens the hose 24.

In the case of expanding another clip having a different opening diameter, it is adequate that the position of the sensor holding member 72 is changed as necessary to prevent obstruction of the proximity sensor 70. As described above, the cam groove 80 is formed in the sensor holding member 72, and the cam projection 78 is engaged with the cam groove 80 (see FIG. 6). Therefore, it is adequate that the operator holds the sensor holding member 72, and moves the sensor holding member 72 in a manner that the cam groove 80 moves relatively along the cam projection 78.

In the embodiment of the present invention, the cam groove 80 as shown in FIG. 6 is formed in a crank shape. In the structure, it is possible to position the cam projection 78 relative to a first position P1 indicated by a solid line, a second position P2 and a third position P3 indicated by virtual lines, relative to the cam groove 80. The position of the sensor holding member 72 relative to the base 36 can be changed by positioning the cam projection 78 at any of the first position PI, the second position P2, and the third position P3. Therefore, for each of a plurality of types of clips having different opening diameters, it becomes possible to determine whether the clip is present at the base 36 without changing the detection distance of the proximity sensor 70 or without performing complicated computation processing.

The present invention is not specially limited to the embodiment as described above.

For example, in the embodiment, the claw having the insertion hole 18 is referred to as the first claw 14, and the claw which does not have the insertion hole 18 is referred to as the second claw 16. However, these names are not intended to specify both of claws in a limiting manner, but intended to clarify the distinction between the claw held by the first claw holder 38 and the claw pressed by the pressing body 52 for the purpose of convenience. That is, conversely, it is a matter of course that the claw which does not have the insertion hole 18 may be referred to as the first claw 14, and the claw which having the insertion hole 18 may be referred to as the second claw 16.

Incidentally, the main body 12 is not limited to a circular ring shape, but may be a polygonal ring shape.

Further, the mounts 56a, 56b may be positioned so as to be capable of counteracting the moment of force around the first claw 14 (counterclockwise in FIG. 7) generated in the clip 10 when the clip 10 is expanded. There is no problem even if the mounts 56a, 56b are slightly spaced from the second claw 16.

Furthermore, instead of providing the magnet 62 on the first claw holder 38, a magnet may be provided on the mounts 56a, 56b (main body supports 35a, 35b). Alternatively, magnets may be provided on both the first claw holder 38 and the mounts 56a, 56b (main body supports 35a, 35b).

Further, the cam groove 80 may be formed in the base 36, and the cam projections 78 may be formed on the legs 74a, 74b of the sensor holding member 72.

Moreover, the front end of the rod 46 may be used as the pressing part.

The moving mechanism is not limited to the pneumatic cylinder 42, but may employ an electromagnetic solenoid or a ball screw mechanism. Further, although an above-mentioned linear motion mechanism is desirable, it is not particularly limited thereto.

## Claims

1. A clip expansion apparatus (30) for expanding a clip (10),
the clip (10) comprising:
a main body (12) curved in a ring shape; and
a first claw (14) and a second claw (16) provided at both ends of the main body (12) to protrude outward in a diameter direction,
the clip (10) being expanded by moving the first claw (14) and the second claw (16) toward each other; a base (36) including a slide hole (50) having an opening opened to the clip (10);
**characterized in that**
the clip expansion apparatus (30) further comprises:
two main body supports (35a, 35b) respectively provided with mounts (56a, 56b) disposed in the opening of the slide hole (50) with a clearance between the two main body supports (35a, 35b) and the mounts (56a, 56b) configured to support the main body (12) by contacting an outer circumferential surface (20) between the first claw (14) and the second claw (16);
a first claw holder (38) configured to support an outer surface of the first claw (14); and
a pressing part (52) configured to move back and forth in the slide hole (50) relative to the first claw holder (38) by a moving mechanism (42),
wherein when the pressing part (52) moves toward the first claw holder (38), the pressing part (52) presses an outer surface of the second claw (16) inserted between the two main body supports (35a, 35b) and into the slide hole (50) to move the second claw (16) toward the first claw (14) .

2. The clip expansion apparatus (30) according to claim 1, wherein the main body support (35a, 35b) is detachably attached to the base (36).

3. The clip expansion apparatus (30) according to claim 1, wherein a magnet (62) is provided for the main body support (35a, 35b).

4. The clip expansion apparatus (30) according to any one of claims 1 to 3, further comprising a stopper (37) attached to the base (36), the stopper (37) including a pair of second claw guides (61a, 61b) configured to guide the second claw (16) when the second claw (16) is inserted between the second claw guides (61a, 61b).

5. The clip expansion apparatus (30) according to any one of claims 1 to 4, further comprising:
an instruction means (84);
a detection means (70) supported by the base (36), and configured to detect that the clip (10) is present at the base (36); and
a control means (82) configured to permit movement of the pressing part (52) toward the first claw holder (38) when an instruction to expand the clip (10) is issued from the instruction means (84) and the detection means (70) detects that the clip (10) is present at the predetermined position with respect to the base (36).

6. The clip expansion apparatus (30) according to claim 5, wherein the detection means (70) is held by a detection means holding member (72), and the detection means holding member (72) is fixed to the base (36) in a manner that a position of the detection means holding member (72) relative to the base (36) is changeable.

7. The clip expansion apparatus (30) according to claim 6, wherein the detection means (70) is supported by the base (36) through a detection means holding member (72), an engagement part (78) is provided for one of the detection means holding member (72) and the base (36), and an engagement groove (80) is provided for another of the detection means holding member (72) and the base (36), for engagement with the engagement part (78) in a movable manner; and
wherein the position of the detection means holding member (72) relative to the base (36) is changeable by moving the engagement part (78) within the engagement groove (80) .

8. The clip expansion apparatus (30) according to any one of claims 1 to 7, wherein a magnet (62) is provided for the first claw holder (38).

## Patentansprüche

1. Cliperweiterungsvorrichtung (30) zum Erweitern eines Clips (10),
wobei der Clip (10) aufweist:
einen Hauptkörper (12), der in einer Ringform gebogen ist; und
eine erste Klaue (14) und eine zweite Klaue (16), die an beiden Enden des Hauptkörpers (12) vorgesehen sind, um in einer Durchmesserrichtung nach außen hervorzustehen,
wobei der Clip (10) erweitert wird, indem die erste Klaue (14) und die zweite Klaue (16) zueinander bewegt werden;
eine Basis (36), die eine Verschiebeöffnung (50) aufweist, die eine Öffnung hat, die zum Clip (10) geöffnet ist;
**dadurch gekennzeichnet, dass**
die Cliperweiterungsvorrichtung (30) weiterhin aufweist:
zwei Hauptkörperträger (35a, 35b), die jeweils mit Lagerelementen (56a, 56b) vorgesehen sind, die in der Öffnung der Verschiebungsöffnung (50) mit einem Abstand zwischen den beiden Hauptkörperträgern (35a, 35b) angeordnet sind, und die Lagerelemente (56a, 56b) ausgestaltet sind, den Hauptkörper (12) zu tragen, indem eine Außenumfangsfläche (12) zwischen der ersten Klaue (14) und der zweiten Klaue (16) berührt wird;
einen ersten Klauenhalter (38), der ausgestaltet ist, eine Außenfläche der ersten Klaue (14) zu halten; und
ein Pressteil (52), das ausgestaltet ist, sich in der Verschiebeöffnung (50) bezüglich dem ersten Klauenhalter (38) durch einen Bewegungsmechanismus (42) nach hinten und vorne zu bewegen,
wobei, wenn das Pressteil (52) sich in Richtung des ersten Klauenhalters (38) bewegt, das Pressteil (52) eine Außenfläche der zweiten Klaue (16) presst, die zwischen den beiden Hauptkörperträgern (35a, 35b) und in die Verschiebeöffnung (50) eingesetzt ist, um die zweite Klaue (16) in Richtung der ersten Klaue (14) zu bewegen.

2. Cliperweiterungsvorrichtung (30) nach Anspruch 1, wobei der Hauptkörperträger (35a, 35b) entfernbar an der Basis (36) angebracht ist.

3. Cliperweiterungsvorrichtung (30) nach Anspruch 1, wobei ein Magnet (62) für den Hauptkörperträger (35a, 35b) vorgesehen ist.

4. Cliperweiterungsvorrichtung (30) nach einem der Ansprüche 1 bis 3, der weiterhin ein Stoppelement (37) aufweist, das an der Basis (36) angebracht ist, wobei das Stoppelement (37) ein Paar von Führungen der zweiten Klaue (61a, 61b) aufweist, die ausgestaltet sind, die zweite Klaue (16) zu führen, wenn die zweite Klaue (16) zwischen den Führungen der zweiten Klaue (61a, 61b) eingesetzt ist.

5. Cliperweiterungsvorrichtung (30) nach einem der Ansprüche 1 bis 4, die weiterhin aufweist:
ein Anweisungsmittel (84);
ein Erfassungsmittel (70), das von der Basis (36) gehalten wird, und ausgestaltet ist, zu erfassen, dass der Clip (10) an der Basis (36) vorhanden ist; und
ein Steuermittel (82), das ausgestaltet ist, eine Bewegung des Pressteils (52) in Richtung des ersten Klauenhalters (38) zu gestatten, wenn eine Anweisung zur Erweiterung des Clips (10) vom Anweisungsmittel (84) abgesetzt wird, und das Erfassungsmittel (70) erfasst, dass der Clip (10) an der vorbestimmten Position bezüglich der Basis (36) vorhanden ist.

6. Cliperweiterungsvorrichtung (30) nach Anspruch 5, wobei das Erfassungsmittel (70) von einem Erfassungsmittel-Halteelement (72) gehalten wird, und das Erfassungsmittel-Halteelement (72) an der Basis (36) in einer Weise befestigt ist, dass eine Position des Erfassungsmittel-Halteelements (72) bezüglich der Basis (36) veränderbar ist.

7. Cliperweiterungsvorrichtung (30) nach Anspruch 6, wobei das Erfassungsmittel (70) an der Basis (36) über ein Erfassungsmittel-Halteelement (72) gehalten wird, wobei ein Eingriffsteil (78) für eines von dem Erfassungsmittel-Halteelement (72) und der Basis (36) vorgesehen ist, und eine Eingriffsnut (80) für das andere von dem Erfassungsmittel-Halteelement (72) und der Basis (36) zum Eingreifen in das Eingriffsteil (78) in beweglicher Weise vorgesehen ist; und
wobei die Position des Erfassungsmittel-Halteelements (72) bezüglich der Basis (36) veränderbar ist, indem das Eingriffsteil (78) in der Eingriffsnut (80) bewegt wird.

8. Cliperweiterungsvorrichtung (30) nach einem der Ansprüche 1 bis 7, wobei ein Magnet (62) für den ersten Klauenhalter (38) vorgesehen ist.

## Revendications

1. Appareil d'extension d'attache (30) pour étendre une attache (10),
l'attache (10) comprenant :
un corps principal (12) incurvé en forme d'anneau ; et
une première griffe (14) et une deuxième griffe (16) prévues aux deux extrémités du corps principal (12) pour faire saillie vers l'extérieur dans une direction de diamètre,
l'attache (10) étant étendue en déplaçant la première griffe (14) et la deuxième griffe (16) l'une vers l'autre ;
une base (36) comportant un trou de coulissement (50) ayant une ouverture ouverte vers l'attache (10) ;
**caractérisé en ce que**
l'appareil d'extension d'attache (30) comprend en outre :
deux supports de corps principal (35a, 35b) pourvus respectivement de montures (56a, 56b) disposées dans l'ouverture du trou de coulissement (50) avec un jeu entre les deux supports de corps principal (35a, 35b) et les montures (56a, 56b) configurées pour supporter le corps principal (12) en mettant en contact une surface circonférentielle extérieure (20) entre la première griffe (14) et la deuxième griffe (16) ;
un premier porte-griffe (38) configuré pour supporter une surface extérieure de la première griffe (14) ; et
une partie de pression (52) configurée pour se déplacer en va-et-vient dans le trou de coulissement (50) par rapport au premier porte-griffe (38) par un mécanisme de déplacement (42),
dans lequel lorsque la partie de pression (52) se déplace vers le premier porte-griffe (38), la partie de pression (52) presse une surface extérieure de la deuxième griffe (16) insérée entre les deux supports de corps principal (35a, 35b) et dans le trou de coulissement (50) pour déplacer la deuxième griffe (16) vers la première griffe (14).

2. Appareil d'extension d'attache (30) selon la revendication 1, dans lequel le support de corps principal (35a, 35b) est fixé de manière amovible à la base (36).

3. Appareil d'extension d'attache (30) selon la revendication 1, dans lequel un aimant (62) est prévu pour le support de corps principal (35a, 35b).

4. Appareil d'extension d'attache (30) selon l'une quelconque des revendications 1 à 3, comprenant en outre une butée (37) fixée à la base (36), la butée (37) comportant une paire de deuxièmes guides de griffe (61a, 61b) configurée pour guider la deuxième griffe (16) lorsque la deuxième griffe (16) est insérée entre les deuxièmes guides de griffe (61a, 61b).

5. Appareil d'extension d'attache (30) selon l'une quelconque des revendications 1 à 4, comprenant en outre :
un moyen d'instruction (84) ;
un moyen de détection (70) supporté par la base (36), et configuré pour détecter que l'attache (10) est présente au niveau de la base (36) ; et
un moyen de commande (82) configuré pour permettre un déplacement de la partie de pression (52) vers le premier porte-griffe (38) lorsqu'une instruction d'extension de l'attache (10) est émise par le moyen d'instruction (84) et le moyen de détection (70) détecte que l'attache (10) est présente à la position prédéterminée par rapport à la base (36).

6. Appareil d'extension d'attache (30) selon la revendication 5, dans lequel le moyen de détection (70) est maintenu par un élément de maintien de moyen de détection (72), et l'élément de maintien de moyen de détection (72) est fixé à la base (36) de manière qu'une position de l'élément de maintien de moyen de détection (72) par rapport à la base (36) est modifiable.

7. Appareil d'extension d'attache (30) selon la revendication 6, dans lequel le moyen de détection (70) est supporté par la base (36) à travers un élément de maintien de moyen de détection (72), une partie de mise en prise (78) est prévue pour un parmi l'élément de maintien de moyen de détection (72) et la base (36), et une rainure de mise en prise (80) est prévue pour l'autre parmi l'élément de maintien de moyen de détection (72) et la base (36), pour une mise en prise avec la partie de mise en prise (78) de manière mobile ; et
dans lequel la position de l'élément de maintien de moyen de détection (72) par rapport à la base (36) est modifiable en déplaçant la partie de mise en prise (78) à l'intérieur de la rainure de mise en prise (80).

8. Appareil d'extension d'attache (30) selon l'une quelconque des revendications 1 à 7, dans lequel un aimant (62) est prévu pour le premier porte-griffe (38).
